# EUROPEAN PATENT APPLICATION

(11) **EP 4 340 194 A1**
(43) Date of publication of application: **20.03.2024**
(21) Application number: 23197669.7
(22) Date of filing: 15.09.2023
(51) Int. Cl.: H02K 16/00, H02K 41/03, H02K 7/14

(54) **ROTATABLE LINEAR ACTUATOR**

(30) Priority: 15.09.2022 US 202263407025 P
(71) Applicant: ATS Automation Tooling Systems Inc., Cambridge, Ontario N3H 4R7 (CA)
(72) Inventor: HOGAN, Roger, Cambridge (CA)
(74) Representative: Noble, Nicholas

(57) **Abstract**

A rotatable linear actuator comprises an actuator body; a drive shaft arranged within the actuator body, the drive shaft having a longitudinal axis and configured to be linearly actuated along and rotatable around the longitudinal axis within the actuator body, wherein the drive shaft is configured to be coupled at a first end thereof to a linearly actuated component that is configured to receive linear and rotational movement; one or more permanent magnets coupled to the drive shaft and magnetized in a radial direction about the longitudinal axis; and one or more electric coils disposed within the actuator body around the one or more permanent magnets and configured to receive an electric current that interacts with a magnetic field of the one or more permanent magnets to generate an axial force to linearly actuate the drive shaft. Accordingly, the drive shaft is rotatable while being linearly actuated.

## Description

### CROSS-REFERENCE TO RELATED APPLICATIONS

This application claims priority to US Provisional Patent Application No. 63/407,025, filed on September 15, 2022.

### TECHNICAL FIELD

The present disclosure relates to linear actuators, and in particular to rotatable linear actuators.

### BACKGROUND

There are several applications where it would be desirable to rotate a linear actuator, particularly in manufacturing and quality control applications. However, rotating a linear actuator requires complex designs to accommodate the rotating parts. In situations where only small rotations are desired, such as less than 180 degree rotations, wiring to the actuator components can generally be designed to accommodate such rotation. However, if a larger degree of rotation is desired the wiring can generally not be designed to accommodate such rotation, let alone if a 360 degree rotation is performed or if multiple 360 degree rotations are performed.

As one example, gripping devices are used in manufacturing and quality control applications to grab an object and move the object from one location to another as well as to hold the object for inspection. To grab the object, a gripping unit of the gripping device is linearly actuated. To move the object and to facilitate inspection of the object, it would be beneficial to rotate the object while being held by the gripper unit. Further, in particular for smaller objects such as vials or syringes, during the manufacturing process the ability to move and reposition the objects along the assembly line requires accuracy and precision to avoid damage while maintaining efficiency. The overall size of the gripper and associated control hardware can limit the flexibility of the assembly line configuration and processing efficiency. It would be beneficial to have a rotatable linear actuator that could be incorporated into such gripping devices without requiring a complex design, and while also providing accuracy and precision of the actuation.

Accordingly, an additional, alternative, and/or improved rotatable linear actuator remains highly desirable.

### BRIEF DESCRIPTION OF THE DRAWINGS

Features and advantages of the present disclosure will become apparent from the following detailed description, taken in combination with the appended drawings, in which:
FIGs. 1A and 1B show a representation of a conveying system with a gripping device using the rotatable linear actuator in accordance with the present disclosure arranged thereon;
FIGs. 2A and 2B show a representation of the gripping device using the rotatable linear actuator arranged on a support unit for mounting to the conveying system;
FIGs. 3A-E show the gripping device, comprising a gripping unit and a rotatable linear actuator in accordance with the present disclosure;
FIGs. 4A-4C show an example of an alternative gripping device comprising the rotatable linear actuator in accordance with the present disclosure;
FIG. 5A shows the drive shaft and magnets of the rotatable linear actuator;
FIG. 5B shows the drive shaft and magnets of the rotatable linear actuator, with the drive shaft coupled to the slotted hub of the gripping unit;
FIGs. 6A-D show a representation of transferring an object between gripping devices using the rotatable linear actuator in accordance with the present disclosure; and
FIG. 7 shows a method of transferring an object between gripping devices using the rotatable linear actuator in accordance with the present disclosure.

It will be noted that throughout the appended drawings, like features are identified by like reference numerals.

### DETAILED DESCRIPTION

In accordance with one aspect of the present disclosure, a rotatable linear actuator is disclosed, comprising: an actuator body; a drive shaft arranged within the actuator body, the drive shaft having a longitudinal axis and configured to be linearly actuated along and rotatable around the longitudinal axis within the actuator body, wherein the drive shaft is configured to be coupled at a first end thereof to a linearly actuated component that is configured to receive linear and rotational movement; one or more permanent magnets coupled to the drive shaft and magnetized in a radial direction about the longitudinal axis; and one or more electric coils disposed within the actuator body around the one or more permanent magnets and configured to receive an electric current that interacts with a magnetic field of the one or more permanent magnets to generate an axial force to linearly actuate the drive shaft.

In some aspects, the rotatable linear actuator further comprises an electric motor disposed within the actuator body and configured to rotate a rotationally actuated component. The rotationally actuated component may also be the linearly actuated component or be coupled to the linearly actuated component.

In some aspects, the one or more permanent magnets are coupled to the drive shaft at a second end thereof.

In some aspects, the rotatable linear actuator comprises two permanent magnets and two corresponding electric coils each disposed around a respective of the two permanent magnets, wherein the two permanent magnets have opposite polarity.

In some aspects, the rotatable linear actuator further comprises a magnetically-permeable material disposed between the drive shaft and the one or more permanent magnets.

In some aspects, the rotatable linear actuator further comprises a bobbin arranged in the actuator body around the one or more permanent magnets, and wherein the one or more electric coils are wound around the bobbin.

In some aspects, the rotatable linear actuator further comprises a magnetically-permeable coil housing within which the one or more electric coils are disposed.

In some aspects, the one or more electric coils are disposed around the one or more permanent magnets and extend along the longitudinal axis of the drive shaft according to an actuation amount of the drive shaft.

In some aspects, the rotatable linear actuator further comprises a wireless transceiver configured to receive wireless instructions to control the rotatable linear actuator.

In some aspects, the rotatable linear actuator further comprises a sensor configured to measure a position of the drive shaft.

In accordance with another aspect of the present disclosure a gripping device is disclosed, comprising the rotatable linear actuator of any one of the above aspects, and a gripping unit that is configured to be rotated and to be actuated between open and closed positions by the drive shaft to grip an object.

In some aspects, the gripping unit comprises a hub that is the linearly actuated component coupled to the drive shaft, and two or more gripper jaws coupled to the hub and that actuate between the open and closed positions when the hub is linearly actuated by the drive shaft.

In some aspects, the hub comprises angled slots, and wherein the two or more gripper jaws are each coupled to a roller disposed within a respective angled slot, wherein linear actuation of the hub causes movement of the roller within the respective angled slot and actuation of the corresponding gripper jaw.

In some aspects, the two or more gripper jaws are pivotally coupled to a gripper housing, and wherein the gripper housing is the rotationally actuated component rotatable by the electric motor.

In some aspects, the two or more gripper jaws are coupled to a linear rail perpendicular to the longitudinal axis of the drive shaft.

In another aspect of the present disclosure, a conveying system is disclosed, comprising the gripping device of any one of the above aspects.

In another aspect of the present disclosure, a method of transferring an object between first and second gripping devices is disclosed, the first and second gripping devices each corresponding to the gripping device of any one of the above aspects, and the method comprising: gripping a first portion of the object with the gripping unit of the first gripping device; positioning the second gripping device at a second portion of the object; actuating the gripping unit of the second gripping device to grip the second portion of the object; and actuating the gripping unit of the first gripping device to release the first portion of the object.

In some aspects, positioning the second gripping device at the second portion of the object comprises moving the first gripping device and the second gripping device towards each other at a constant speed.

In some aspects, positioning the second gripping device at the second portion of the object comprises rotating at least one of the first and second gripping devices to a predetermined orientation.

In some aspects, the method further comprises rotating at least one of the first and second gripping devices while the gripping unit is being actuated.

The present disclosure provides a rotatable linear actuator where linear motion of a drive shaft is achieved using a magnet and coil assembly, thus allowing the drive shaft to be rotatable while also being linearly actuated. The use of the magnet and coil assembly to drive the drive shaft provides for a simplified device and compact design as components of the actuator driving the drive shaft in the linear direction do not have to rotate.

As discussed above, there are several applications where it would be beneficial to rotate a linear actuator, and the rotatable linear actuator in accordance with the present disclosure can be scaled up or down and used in any application requiring both linear actuation and rotation of one or more actuated components. The rotatable linear actuator may provide particular benefits when used in applications where an element is being rotated more than 180 degrees, for example, and even further benefits in applications where the element is being rotated 360 degrees more than once, where a wired connection cannot be designed to accommodate the rotation.

Accordingly, although the present disclosure describes the rotatable linear actuator with reference to a particular implementation where the rotatable linear actuator is used in a gripping device as part of a manufacturing/quality control application, it will be appreciated that the rotatable linear actuator can be used in any application requiring both linear actuation and rotation of an actuated component.

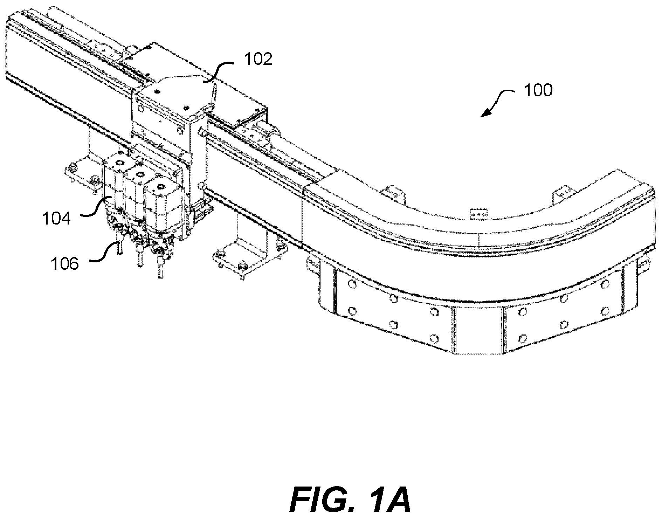

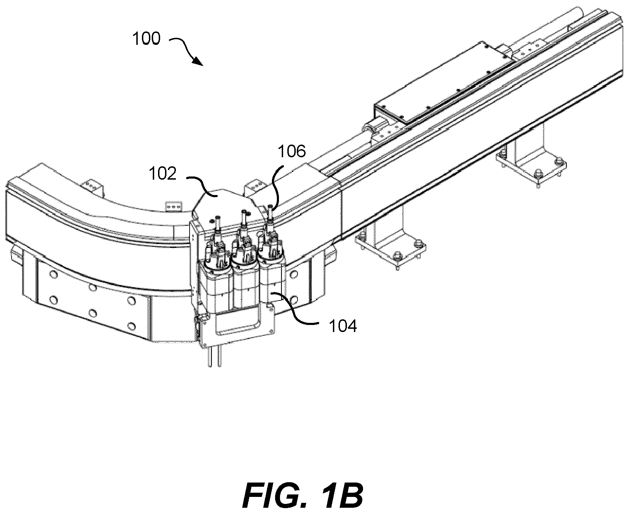

Embodiments are described below, by way of example only, with reference to Figures 1-7.

FIGs. 1A and 1B show a representation of a conveying system 100 used in a manufacturing process with a gripping device 104 using a rotatable linear actuator in accordance with the present disclosure. The gripping device is arranged on the conveying system via a support unit 102. The conveying system 100 may for example be a SuperTrak^{™} conveying system by ATS^{™}, however it will be appreciated that the rotatable linear actuator may be used as part of other devices (i.e. not just a gripping device), and with other types of applications (e.g. as an end effector on a robotic arm, in pick-and-place applications, for example).

As seen in FIGs. 1A and 1B, the gripping device 104 is mounted on the conveying system 100 with support unit 102 and may be arranged in different configurations for gripping an object 106, such as facing downward to grip object 106 from above (as in FIG. 1A) or facing upward to grip the object 106 from below (as in FIG. 1B). The conveying system 100 in this example is configured to drive the support unit 102 linearly along a track to move the gripping device 104 from one position to another. In this manner, the rotatable linear actuator may be used to cause the gripping device 104 to pick up an object at one location, and the gripping device 104 can be driven to another location along the conveying system 100, where the object is dropped off. The support unit 102 may also provide means to move the movement along the track by rollers, or belts to facilitate movement of the unit.

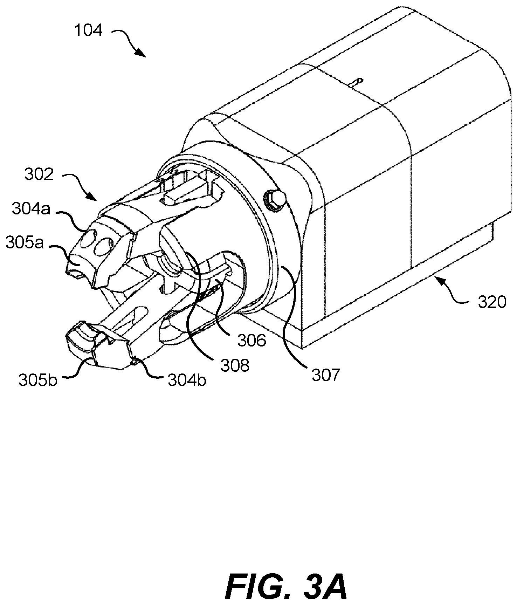

In certain implementations, one or more cameras (not shown) may be arranged at different locations along the conveying system 100 to image the object 106 held by the rotatable linear actuator 104 for inspection. For example, the camera may be used to inspect a cap of the object, crimping or cracks in the object, and/or the substance inside the object. In some applications, the object may contain a liquid and the camera may be used to inspect for any particulates in the liquid. As would be appreciated, to facilitate inspection of the object, it would be desirable to rotate the object 106 while it is held by the gripping device 104. As described in more detail with reference to FIGs. 3A-E, the rotatable linear actuator in accordance with the present disclosure comprises a drive shaft configured to be linearly actuated along its longitudinal axis and rotatable around its longitudinal axis. In the gripping device 104, the drive shaft is configured to actuate a gripping unit between open and closed positions to grip and release an object, and is also able to be rotatable to support rotational movement of the gripping unit. The drive shaft is thus configured to be rotated and linearly actuated, including being simultaneously rotated and linearly actuated. Accordingly, a gripping device using the rotatable linear actuator in accordance with the present disclosure can grip and rotate objects to facilitate inspection. The rotatable linear actuator design also facilitates hand-off of objects between gripping devices, and a method of transferring an object between two gripping devices is also disclosed.

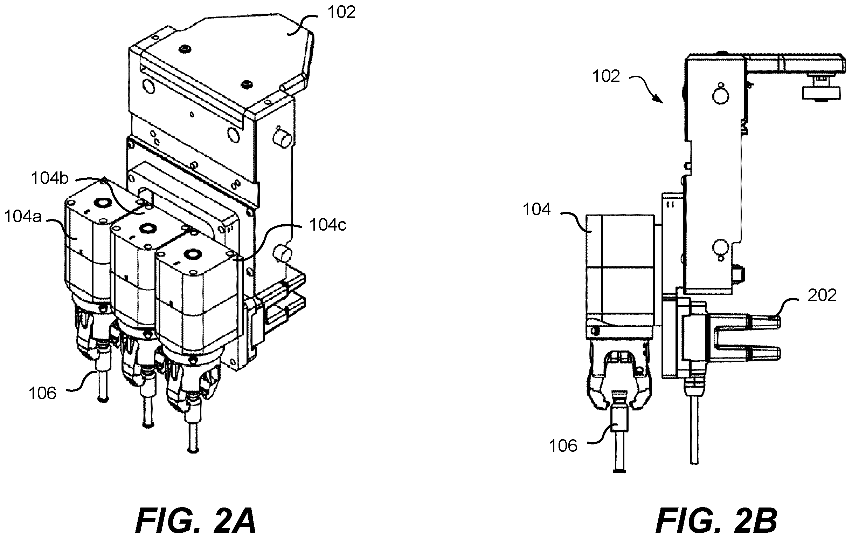

FIGs. 2A and 2B show a representation of the gripping device 104 using the rotatable linear actuator arranged on a support unit 102 for mounting to the conveying system. FIG. 2B also provides an enlarged view of the gripping device 104 holding object 106. Figure 2A shows multiple gripping devices 104a, 104b, 104c coupled to a common support unit 102.

In this particular implementation, the support unit 102 may provide power to the gripping device 104. In some examples, the support unit 102 may provide inductive power to the gripping device 104, and the support unit comprises inductive power pickup 202, where power is delivered to the gripping devices by inductive power coils along the track to the rear of the support unit 102.The gripping device 104 may comprise or be coupled to a microcontroller (not shown) that is configured to control power to different components of the gripping device. The gripping device 104 and particularly the rotatable linear actuator may also comprise a wireless transceiver configured to receive commands from a central controller allowing communication to one or more gripping devices.

The support unit 102 is one example of how the gripping device 104 may be mounted to a conveying system, however as described with reference to FIGs. 1A and 1B, the rotatable linear actuator may be used in other applications and the use of support unit 102 for mounting gripping device 104 is therefore a non-limiting example.

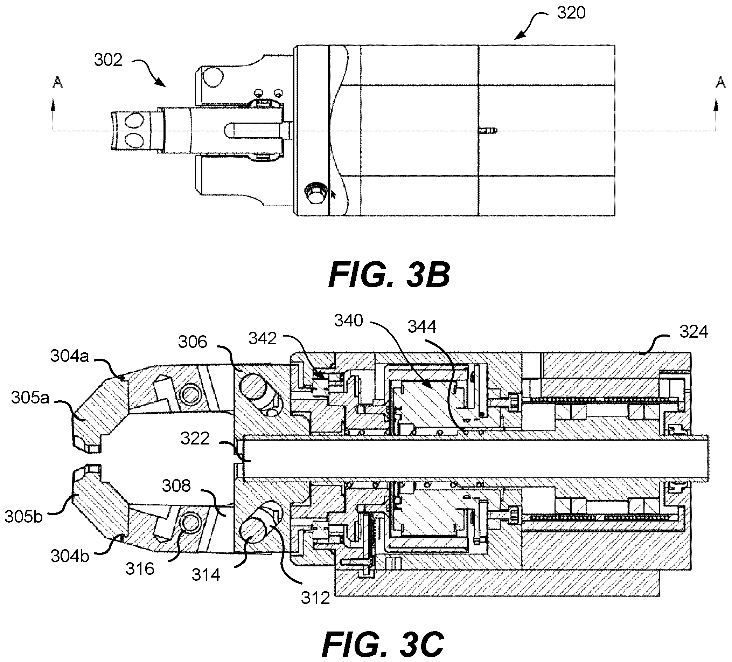

FIGs. 3A-E show the gripping device 104, comprising a gripping unit 302 and a rotatable linear actuator 320 in accordance with the present disclosure. FIG. 3A is a perspective view of the gripping device 104. FIG. 3B is a top view of the gripping device 104. The rotatable linear actuator 320 is configured to linearly actuate and rotate actuated components of the gripping unit 302. Again, it will be appreciated that the rotatable linear actuator 320 may be used to linearly actuate and rotate various types of actuated components, and therefore the use of gripping unit 302 is non-limiting.

The gripping unit 302 comprises at least one actuated gripper jaw that is configured to be actuated to grab and release an object. While different configurations of gripping units are possible, the gripping unit 302 as shown comprises two actuated gripper jaws 304a and 304b, which comprise hinged gripper fingers 305a and 305b configured to grip the object, although more actuated gripper jaws may be utilized. The gripper jaws 304a and 304b may be pivotally arranged on a gripper housing 308, which is configured to be rotated. Bearings (not seen in FIG. 3A) are used to facilitate rotation of the gripper housing 308, and are covered with a bearing cap 307. Further, the gripper jaws 304a and 304b are coupled to a slotted hub 306 that receives a drive shaft of the rotatable linear actuator 320 and is configured to be linearly actuated. Actuation of the slotted hub 306 by the drive shaft of the rotatable linear actuator 320 causes actuation of the gripper jaws 304a and 304b about the pivot, as described in more detail below, between an open and a closed position. Advantageously, the rotatable linear actuator 320 supports both linear and rotational motion to linearly actuate the slotted hub 306 and to rotate the gripper housing 308.

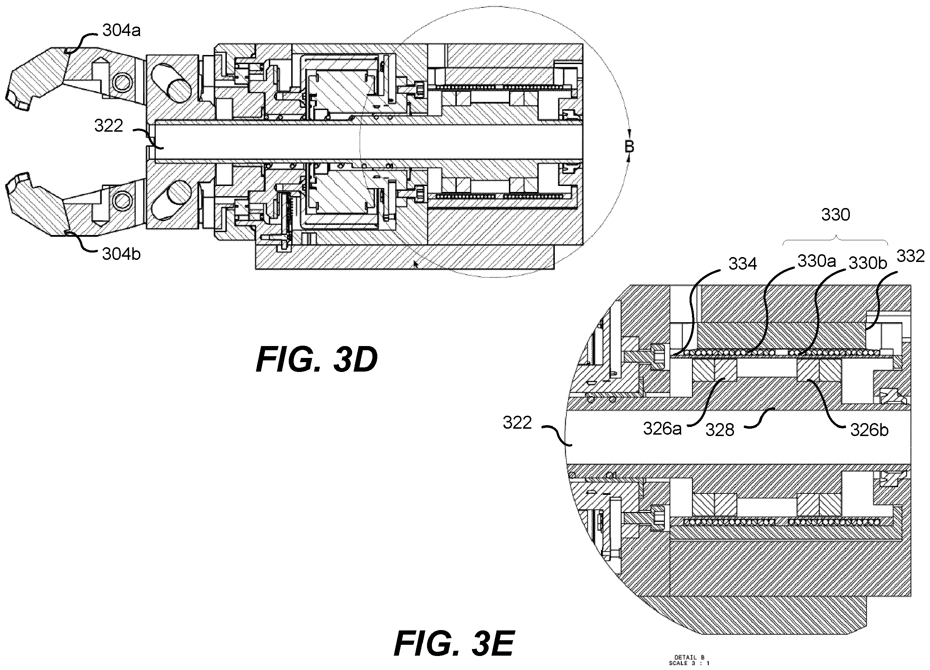

FIG. 3C is a cross-sectional view of the gripping device taken along the line A-A in FIG. 3B, with the rotatable linear actuator 320 actuated so that the gripping unit 302 is in a closed configuration. FIG. 3D is a cross-sectional view of the gripping device with the rotatable linear actuator 320 actuated so that the gripping unit 302 is in the open configuration taken along the line A-A in FIG. 3B.

Actuation of the gripping unit 302 between the open and closed configurations is achieved by actuation of a drive shaft 322 that is coupled to the slotted hub 306 of the gripping unit 302 at a first end thereof. The drive shaft 322 is configured to be linearly actuated within housing 324 of the rotatable linear actuator 320 to actuate the gripper jaws 304a and 304b of the gripping unit 302 between the open and closed configurations. In the configuration shown in FIGs. 3C and 3D, the slotted hub comprises angled slots 312, and the gripper jaws 304a and 304b are respectively coupled to the slotted hub 306 via rollers 314. The gripper jaws 304a and 304b are pivotally coupled to the gripper housing 308 via pivot pins 316.

Referring to FIG. 3C, the angled slots 312 are configured such that as the drive shaft 322 is translated rearward, the slotted hub 306 is moved rearward and the rollers 314 are pushed forward within the angled slots 312. In this position, the hinged connection comprising the pivot pins 316 cause the gripper jaws 304a and 304b and corresponding gripper fingers 305a and 305b to close. Referring to FIG. 3D, as the drive shaft 322 is translated forwards along its longitudinal axis, the slotted hub 306 is moved forward and rollers 314 slide rearward within the angled slots 312. In this position, the hinged connection comprising the pivot pins 316 cause the gripper jaws 304a and 304b and corresponding gripper fingers 305a and 305b to open. In the open position shown in FIG. 3D, the slotted hub 306 is moved linearly in the axial direction by the drive shaft 322. An amount of axial movement may be set by an angle and length of the angled slots 312. Other shapes of angled slots 312 are also possible, such as an "s" shape, which could transition the actuated component between different states (e.g. corresponding to closed, open, and then closed positions). In a further embodiment, the linearly actuated component (i.e. the slotted hub 306 in this case) may be further actuated in the axial direction by inclusion of a second linear actuator coupled to the drive shaft 322.

While the connection between the gripper jaws 304a and 304b, the slotted hub 306, and the drive shaft 322 provides a particularly compact design, a person skilled in the art will also appreciate that other configurations are possible to cause the gripper jaws to open and close, and that such designs may be implemented without departing from the scope of this disclosure. Further, various actuated components could be used instead of gripping unit 302, and therefore the particular connection with which the drive shaft 322 causes actuation of the linearly actuated component can vary.

Linear movement of the drive shaft 322 within the actuator body 324 is advantageously achieved using a magnet and coil assembly. As best seen in FIG. 3E, which shows a detailed view of the area B circled in FIG. 3D, one or more permanent magnets that are magnetized in a radial direction are coupled to the drive shaft 322. In this implementation, there are two sets of permanent magnets 326a and 326b, each set having opposite polarity orientation. There are two magnets shown in each set of the permanent magnets 326a and 326b, simply to double the force in this specific application. The permanent magnets 326a and 326b are coupled to a second end of the drive shaft (i.e. opposite from the end that is coupled to the slotted hub 306), and there is a magnetically-permeable material 328 disposed between the drive shaft 322 and the permanent magnets 326a and 326b.

One or more electric coils 330 are disposed within the actuator body around the one or more permanent magnets. The electric coils 330 are configured to receive an electric current that interacts with a magnetic field of the one or more permanent magnets to generate an axial force to linearly actuate the drive shaft 322. In this example, there are two sets of permanent magnets 326a and 326b, and there are two corresponding electric coils 330a and 330b disposed around the permanent magnets. The two electric coils 330a and 330b are wound in opposite directions since the polarity of the magnets 326a and 326b are opposite each other. Alternatively, instead of having two electric coils 330a and 330b, a single continuous electric coil 330 may be used, wound clockwise around one set of permanent magnets and counter-clockwise around the other set of permanent magnets. The electric coil 330 or electric coils 330a and 330b are configured so that they extend along an axial direction in a range of movement of the magnets 326a and 326b on the drive shaft 322.

The electric coils 330a and 330b are disposed within the actuator body 324 of the rotatable linear actuator 320, and more specifically within a magnetically-permeable coil housing 332. The electric coils 330a and 330b may be wrapped around a plastic bobbin 334, which holds the electric coils 330a and 330b in place. A spring 344 (see FIG. 3C) may be used to help provide a restorative force to the drive shaft 322.

Note that in an alternative configuration, one magnet or set of magnets having the same polarity could be used with one electric coil. The space where the second magnet is shown in FIG. 3E could be filled with steel/iron to keep the air gap in the flux circuit small. However, generally speaking, the use of a second magnet (or set of magnets) and coil yields more force for a given volume of actuator.

Referring again to FIG. 3C, in this implementation the rotatable linear actuator 320 comprises an electric motor 340 configured to cause rotation of the gripper housing 308 and associated gripper jaws 304a and 304b. In this configuration the motor stator is radially inside of the rotor. One or more bearings 342 facilitate rotation of the gripper housing 308. Rotation of the gripper housing 308 rotates the gripper jaws 304a and 304b, and causes corresponding rotation of the slotted hub 306 and drive shaft 322. Due to the magnet and coil assembly described above, the drive shaft 322 can be rotatable about its axis while being linearly actuated, and there is no need for a corresponding rotation of other linear actuator components such as the electric coils 330, thus providing a simplified and compact design of the rotatable linear actuator 320.

Various types of encoders or sensors could be used to provide positional feedback on the drive shaft 322, magnets 326, motor 340, etc. As one example, a laser or optical sensor may be used at the end of the drive shaft 322 to determine its position.

While FIGs. 3C-E show a particular configuration of the magnet and coil assembly with respect to the drive shaft 322, it will be appreciated that design variations are possible and within the scope of this disclosure. As one example, instead of the magnets 326a and 326b being disposed at a distal or second end of the drive shaft 322 that is away from the gripping unit 302, the magnets 326 and the electric coils 330 could be disposed at a proximal or first end of the drive shaft 322 that is closer to the gripping unit 302.

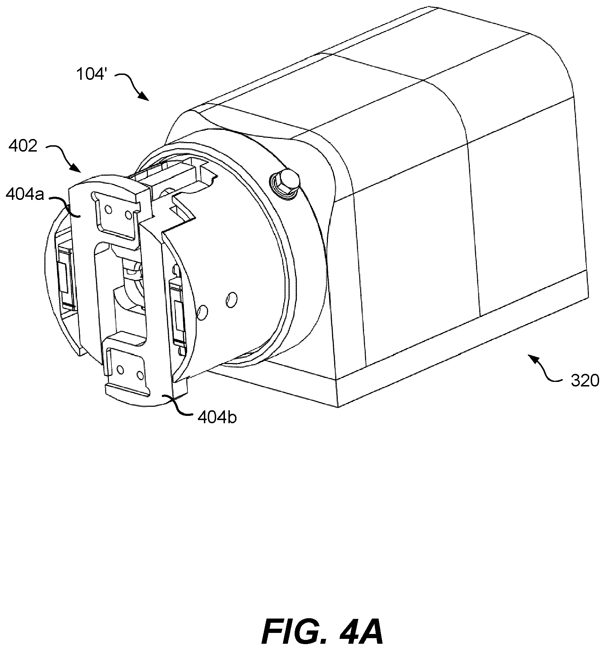

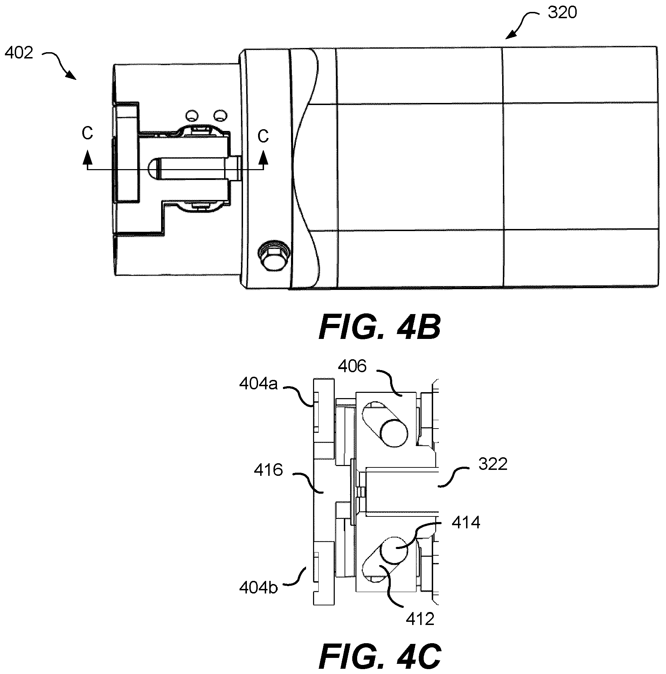

FIGs. 4A-4C show an example of an alternative gripping device 104' comprising a different gripping unit 402 but the same rotatable linear actuator 320 in accordance with the present disclosure. FIG. 4A is a perspective view of the gripping device 104'. FIG. 4B is a top view of the gripping device 104'. FIG. 4C is a sectional view of the gripping unit 402 taken along line C-C in FIG. 4B.

As described above, different components, including different gripping units, may be coupled to and actuated by the rotatable linear actuator 320. In the alternative gripping device 104', instead of gripper jaws 304a and 304b that are pivotally coupled to the gripper housing 308, gripping unit 402 comprises gripper jaws 404a and 404b that are actuated along respective linear rails in a direction towards and away from each other. With two gripper jaws 402a and 402b, the gripper jaws are actuated in opposite directions parallel to each other. However, it would also be appreciated that a different number of gripper jaws may be present, such as four gripper jaws. The linear rails are arranged along a gripping surface of the gripping unit 402 (i.e. perpendicular to the longitudinal axis of the drive shaft 322).

As seen in FIG. 4C, the gripping unit 402 may similarly comprise a slotted hub 406 that is coupled to and linearly actuated by the drive shaft 322 of the rotatable linear actuator 320. The slotted hub 406 comprises angled slots 412, and actuation of the gripping unit 402 between the open and closed configurations is achieved by actuation of the drive shaft 322 that is coupled to the slotted hub 406. In the configuration of the gripping unit 402 shown in FIG. 4C, the gripper jaws 404a and 404b are respectively coupled to the slotted hub 406 via rollers 414, and the gripper jaws 404a and 404b are linearly translatable along a respective linear rail 416 coupled to the slotted hub 406.

More specifically, referring to FIG. 4C, the angled slots 412 are configured such that as the drive shaft 322 is translated forward, the slotted hub 406 is moved forward and the rollers 414 are pushed rearward within the angled slots 412. The gripper jaws 404a and 404b are respectively coupled to the slotted hub 406 via rollers 414 at distal ends thereof. That is, the gripper jaw 404a in FIG. 4C is coupled to the angled slot labelled 412 in FIG. 4C, and the gripper jaw 404b is coupled to the other angled slot. FIG. 4C shows the gripper jaws 404a and 404b in an open position. When the drive shaft is actuated rearward, the rollers 414 within the angled slots 412 are pushed forward, which pulls the respective gripper jaws 404a and 404b towards each other along their respective linear rails 416 and transitions the gripper device 402 to a closed position.

An amount of movement of the gripper jaws 404a and 404b may be set by an angle and length of the angled slots 412. Again, other shapes of angled slots 412 are also possible. While the connection between the gripper jaws 404a and 404b, the slotted hub 406, and the drive shaft 322 provides a particularly compact design, a person skilled in the art will also appreciate that other configurations are possible to cause the gripper jaws to open and close, and that such designs may be implemented without departing from the scope of this disclosure.

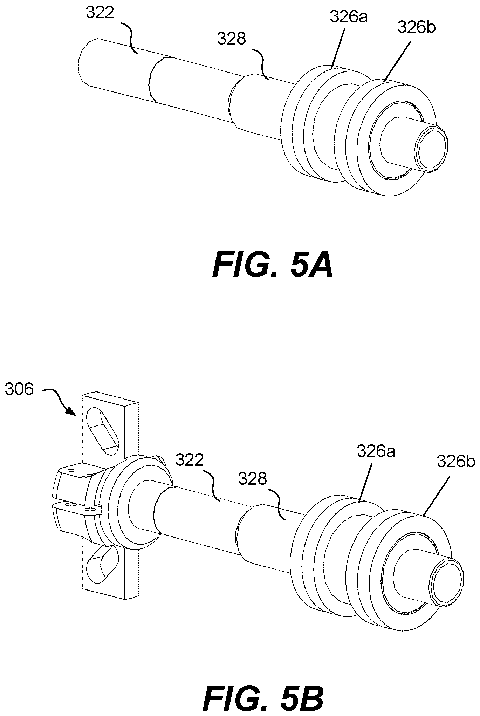

FIG. 5A shows the drive shaft 322 and magnets 326a and 326b of the rotatable linear actuator 320, with the magnetically-permeable material 328 disposed there-between. FIG. 5B shows the drive shaft and magnets of the rotatable linear actuator, with the drive shaft 322 coupled to the slotted hub 306 of the gripping unit in FIGs. 3A-E.

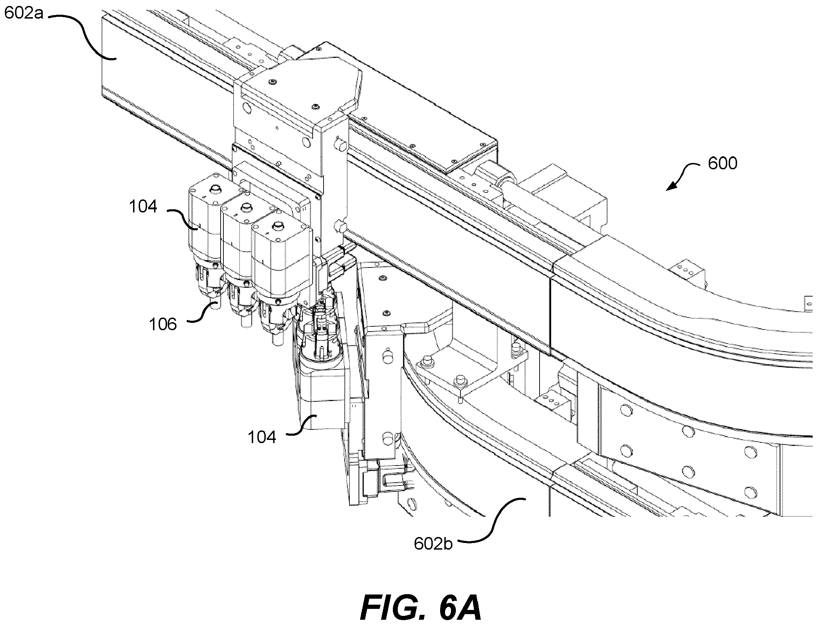

FIGs. 6A-D show a representation of transferring an object between gripping devices using the rotatable linear actuator in accordance with the present disclosure on a conveying system 600. One application of being able to rotate and linearly actuate an actuated component using the rotatable linear actuator as described is the capability of performing advanced operations. In this example, the conveying system 600 may substantially correspond to the conveying system 100 shown in FIGs. 1A and 1B, and comprises a top track 602a and a bottom track 602b, each having a gripping device 104 disposed thereon (in this case there are three gripping devices on the top and bottom tracks).

There may be situations where it is desirable to hand-off objects from one gripping device 104 on one track of the conveying system 600 to another gripping device 104 on another track of the conveying system 600. For example, as described with reference to FIGs. 1A and 1B there may be one or more cameras arranged along the conveying system for imaging the object to inspect for defects. When the object is being held from above there is a clear image of the lower portion of the object but it may be difficult to image the top portion / cap of the object. On the other hand, when the object is being held from below there is a clear image of the top portion and cap of the object but it may be difficult to image the bottom portion of the object. In accordance with the present disclosure, a gripping device 104 on one track of the conveying system 600 can be operated to hand-off the object 106 to the gripping device 104 on another track of the conveying system as a result of the rotatable linear actuator disclosed herein. Specifically, FIGs. 6A-D show the object 106 being transferred from the gripping device 104 on the top track 602a to the gripping device 104 on the bottom track 602b.

FIG. 6A shows the object 106 being held by the gripping device 104 on the top track 602a. The gripping device 104 on the top track 602a and the gripping device 104 on the bottom track 602b are being driven towards each other. As the gripping devices approach each other they are rotated to ensure each gripper is in a desired orientation to facilitate the hand-off. Rotating the grippers to the desired orientation may also be particularly important for non-symmetric objects being held by the grippers.

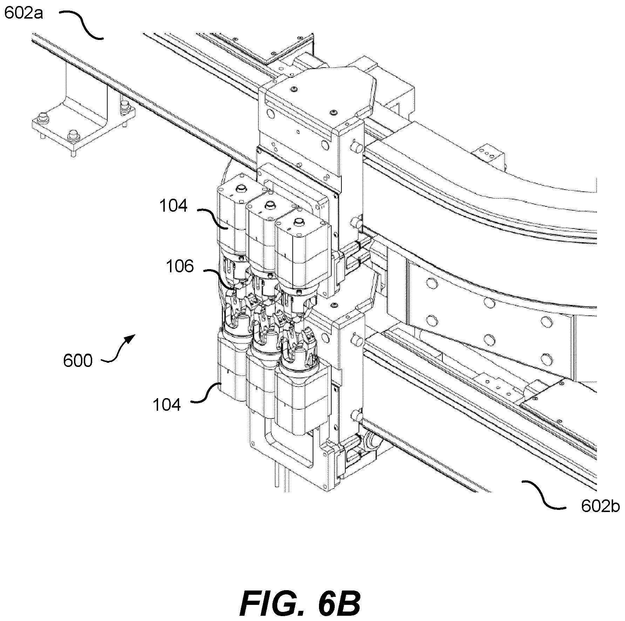

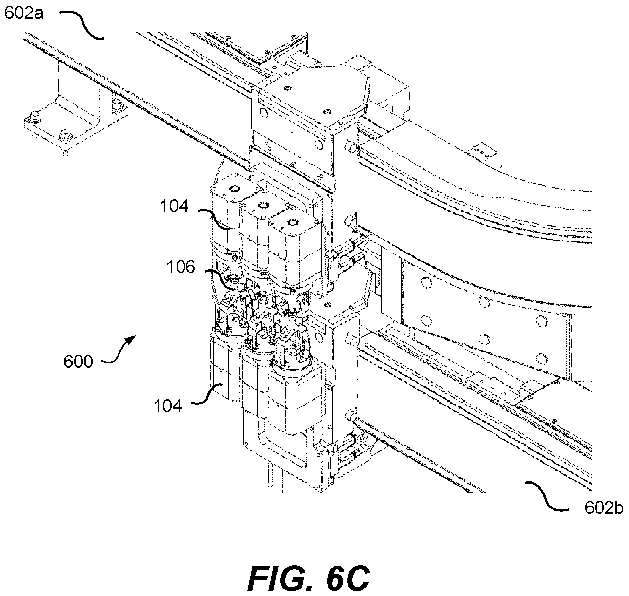

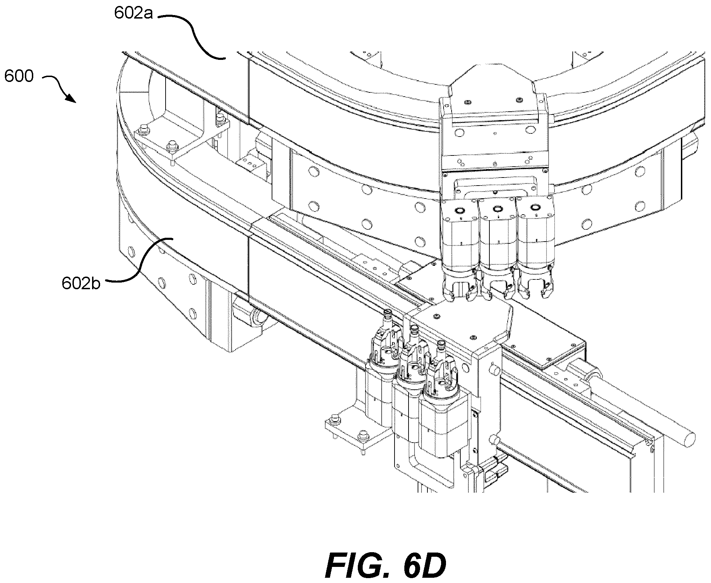

FIG. 6B shows the object 106 being held by gripping device 104 of the top track 602a while the gripping device 104 of the bottom track 602b is positioned directly underneath. The rotatable linear actuators move towards each other with constant and equal velocity, and have been rotated to a desired orientation. When the gripping device 104 on the top track 602a is directly above the gripping device 104 on the bottom track 602b, the gripping device 104 on the bottom track 602b is actuated to grip the object 106. Once the gripping device 104 on the bottom track 602b has gripped the object 106, the gripping device 104 on the top track 602a is actuated to release the object 106. FIG. 6C shows the gripping device 104 on the bottom track 602b holding the object 106 and the gripping device 104 on the top track 602a having released the object 106. FIG. 6D shows the object 106 being held by the gripping device 104 on the bottom track 602b moving away from the gripping device 104 on the top track 602a.

In accordance with the handoff of the object 106 between gripping devices 104, the gripping device 104 are actuated at certain times for grip/release the object to facilitate the handoff. As also described, the gripping device 104 may be rotated before, during, and/or after the handoff. Accordingly, the rotatable linear actuator disclosed herein which permits linear actuation of the drive shaft while being rotated is particularly suited for performing the gripper-to-gripper handoff of an object between gripping devices.

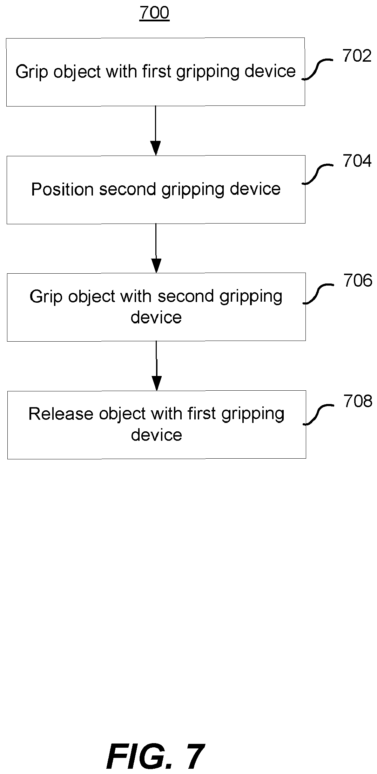

FIG. 7 shows a method 700 of transferring an object between gripping devices using the rotatable linear actuator in accordance with the present disclosure. The method 700 may for example be performed on the conveying system 600 where one gripping device 104 is arranged on a first track and a second gripping device 104 is arranged on a second track.

The method 700 comprises gripping a first portion of a object with a first gripping device (702). A second gripping device is positioned at a second portion of the object (704). For example, positioning the gripping device at the second portion of the object may comprise moving the first gripping device and the second gripping device towards each other at a constant speed. Further, positioning the second gripping device at the second portion of the object may comprise rotating at least one of the first and second gripping devices to a predetermined orientation.

The gripping unit of the second gripping device is actuated to grip the second portion of the object (706), and the gripping unit of the first gripping device is actuated to release the first portion of the object (708). When one or both of the first and second gripping devices are being actuated to grip/release the object, they may also be rotated. The operation of the object transferring procedure can occur by a controller operating the movement and actuation of the associated grippers. Sensors may be provided for determining location and operation state of the gripper process. Alternatively the actuation of the gripper may be performed based upon timed or position based triggers.

It would be appreciated by one of ordinary skill in the art that the system and components shown in the figures may include components not shown in the drawings. For simplicity and clarity of the illustration, elements in the figures are not necessarily to scale, are only schematic and are non-limiting of the elements structures. It will be apparent to persons skilled in the art that a number of variations and modifications can be made without departing from the scope of the invention as described herein.

## Claims

1. A rotatable linear actuator, comprising:
an actuator body;
a drive shaft arranged within the actuator body, the drive shaft having a longitudinal axis and configured to be linearly actuated along and rotatable around the longitudinal axis within the actuator body, wherein the drive shaft is configured to be coupled at a first end thereof to a linearly actuated component that is configured to receive linear and rotational movement;
one or more permanent magnets coupled to the drive shaft and magnetized in a radial direction about the longitudinal axis; and
one or more electric coils disposed within the actuator body around the one or more permanent magnets and configured to receive an electric current that interacts with a magnetic field of the one or more permanent magnets to generate an axial force to linearly actuate the drive shaft.

2. The rotatable linear actuator of claim 1, further comprising an electric motor disposed within the actuator body and configured to rotate a rotationally actuated component.

3. The rotatable linear actuator of claim 1 or claim 2, wherein the one or more permanent magnets are coupled to the drive shaft at a second end thereof.

4. The rotatable linear actuator of any one of claims 1 to 3, comprising two permanent magnets and two corresponding electric coils each disposed around a respective of the two permanent magnets, wherein the two permanent magnets have opposite polarity.

5. The rotatable linear actuator of any one of claims 1 to 4, further comprising one or more of:
a magnetically-permeable material disposed between the drive shaft and the one or more permanent magnets;
a bobbin arranged in the actuator body around the one or more permanent magnets, and wherein the one or more electric coils are wound around the bobbin; and
a magnetically-permeable coil housing within which the one or more electric coils are disposed.

6. The rotatable linear actuator of any one of claims 1 to 5, wherein the one or more electric coils are disposed around the one or more permanent magnets and extend along the longitudinal axis of the drive shaft according to an actuation amount of the drive shaft.

7. The rotatable linear actuator of any one of claims 1 to 6, further comprising one or more of:
a wireless transceiver configured to receive wireless instructions to control the rotatable linear actuator; and
a sensor configured to measure a position of the drive shaft.

8. A gripping device, comprising the rotatable linear actuator of any one of claims 1 to 7, and a gripping unit that is configured to be rotated and to be actuated between open and closed positions by the drive shaft to grip an object.

9. The gripping device of claim 8, wherein the gripping unit comprises a hub that is the linearly actuated component coupled to the drive shaft, and two or more gripper jaws coupled to the hub and that actuate between the open and closed positions when the hub is linearly actuated by the drive shaft.

10. The gripping device of claim 9, wherein the hub comprises angled slots, and wherein the two or more gripper jaws are each coupled to a roller disposed within a respective angled slot, wherein linear actuation of the hub causes movement of the roller within the respective angled slot and actuation of the corresponding gripper jaw.

11. The gripping device of claim 10, wherein either:
the two or more gripper jaws are pivotally coupled to a gripper housing, and wherein the gripper housing is rotationally actuated; or
the two or more gripper jaws are coupled to a linear rail perpendicular to the longitudinal axis of the drive shaft.

12. A conveying system comprising the gripping device of any one of claims 8 to 11.

13. A method of transferring an object between first and second gripping devices, the first and second gripping devices each corresponding to the gripping device of any one of claims 8 to 11, the method comprising:
gripping a first portion of the object with the gripping unit of the first gripping device;
positioning the second gripping device at a second portion of the object;
actuating the gripping unit of the second gripping device to grip the second portion of the object; and
actuating the gripping unit of the first gripping device to release the first portion of the object.

14. The method of claim 13, wherein positioning the second gripping device at the second portion of the object comprises moving the first gripping device and the second gripping device towards each other at a constant speed and/or rotating at least one of the first and second gripping devices to a predetermined orientation.

15. The method of claim 13 or 14, further comprising rotating at least one of the first and second gripping devices while the gripping unit is being actuated.
